# EUROPÄISCHE PATENTSCHRIFT

(11) **EP 2 295 127 B1**
(45) Veröffentlichungstag und Bekanntmachung des Hinweises auf die Patenterteilung: **27.03.2013**
(21) Anmeldenummer: 10162616.6
(22) Anmeldetag: 12.05.2010
(51) Int. Cl.: B01D 35/18, B01D 36/00, F02M 37/22

(54) **Filtereinrichtung mit einer Heizung und einem Wassersensor**
Filter device with a heater and a water sensor
Dispositif de filtre doté d'un chauffage et d'un capteur d'eau

(30) Priorität: 14.09.2009 DE 102009029413
(43) Veröffentlichungstag der Anmeldung: 16.03.2011
(73) Patentinhaber: Robert Bosch GmbH, 70469 Stuttgart (DE)
(72) Erfinder: Couderc, Antoine, 28009, Madrid (ES); Blasco Remacha, Carlos J., 19200, Azuqueca de Henares (Guadalajara) (ES); Garcia Benitez, Cesar, 28028, Madrid (ES); Montes Samaniego, Maria-Eugenia, 39005, Santander (ES)

(56) Entgegenhaltungen:
- EP-A1- 1 188 468
- EP-A1- 1 702 662
- EP-A2- 0 539 661
- DE-A1-102007 010 503
- DE-A1-102008 039 277
- FR-A1- 2 868 331

## Beschreibung

### Stand der Technik

Die Erfindung betrifft eine Filtereinrichtung, insbesondere einen Flüssigkeitsfilter, mit einem Filterelement, welches in einem Filtergehäuse angeordnet ist, mit einer Heizung zum Erwärmen von durch das Filterelement strömendem Medium und mit einem Wassersensor zum Erkennen von im Filtergehäuse gesammeltem Wasser, bei dem die Heizung mit dem Wassersensor in baulicher Einheit ausgebildet ist. Ferner betrifft die Erfindung ein Verfahren zum Betreiben einer Filtereinrichtung, insbesondere eines Flüssigkeitsfilters, die ein in einem Filtergehäuse angeordnetes Filterelement, eine Heizung zum Erwärmen von durch das Filterelement strömendem Medium und einen Wassersensor zum Erkennen von im Filtergehäuse gesammeltem Wasser umfasst.

Um bei Filtereinrichtungen und insbesondere bei Flüssigkeitsfiltern in der Brennstoffversorgung von Kraftfahrzeugen unter verschiedensten Betriebsbedingungen für eine gleichmäßig gute Filtration zu sorgen, ist es bekannt an den Filtereinrichtungen jeweils eine Heizung vorzusehen. Mit der Heizung kann beispielsweise ein Gefrieren oder eine Flockenbildung des zu filternden Mediums, wie beispielsweise Diesel, bei einem Kaltstart eines zugehörigen Kraftfahrzeugs verhindert und für einen gleichmäßig hohen Durchsatz an Medium durch die Filtereinrichtung gesorgt werden. Auch bei Harnstofffiltern kann eine solche Heizung notwendig sein.

Ferner ist es bei derartigen Filtereinrichtungen bekannt, dass diese mit einem Wasserabscheider und einem zugehörigen Wassersensor ausgestaltet sind, mit dem der Füllstand von abgeschiedenem und im Filtergehäuse gesammeltem Wasser ermittelt werden kann.

Bei neuartigen Ausführungsformen derartiger Filtereinrichtungen sind die Heizung und der Wassersensor in einer baulichen Einheit zusammengefasst. Aus FR-A-2 868 331, EP-A-1 188 468, EP-A-1 702 662 A1 und DE-A-10 2007 010503 sind Filtereineinrichtungen bekannt, bei denen unter anderem eine Heizung mit einem Wassersensor in engem baulichen Zusammenhang ausgebildet sind.

Solche Filtereinrichtung bedingen jedoch vergleichsweise hohe Fertigungskosten und benötigen einen vergleichsweise großen Bauraum. Darüber hinaus ist es bei bekannten Filtereinrichtungen nicht möglich die Heizleistung zu steuern, ohne dass dafür weiterer zusätzlicher Bauraum benötigt würde.

Zwar sind Heizungen bekannt, deren Heizelemente als selbstregelnde PTC-Elemente (positiver Temperatur Koeffizient) gestaltet sind. Jedoch erfordern solche PTC-Elemente zur Ableitung der an ihnen erzeugten Wärme zusätzliche Aluminiumplatten, was ebenfalls Bauraum und Herstellungskosten erhöht.

### Offenbarung der Erfindung

Der Erfindung liegt die Aufgabe zugrunde eine Filtereinrichtung bereitzustellen, bei der auf kostengünstige Weise eine besonders kleine, kompakte Bauform der Filtereinrichtung erzielt ist.

Erfindungsgemäß ist eine Filtereinrichtung, insbesondere ein Flüssigkeitsfilter, geschaffen, mit einem Filterelement, welches in einem Filtergehäuse angeordnet ist, mit einer Heizung zum Erwärmen von durch das Filterelement strömendem Medium und mit einem Wassersensor zum Erkennen von im Filtergehäuse gesammeltem Wasser, bei dem die Heizung mit dem Wassersensor in baulicher Einheit ausgebildet ist, und bei der eine zentrale Steuereinrichtung vorgesehen ist, die zum Steuern der baulichen Einheit von Heizung und Wassersensor angepasst ist.

Mit der erfindungsgemäßen Lösung ist eine Steuerung der Heizleistung der Heizung an einer Filtereinrichtung möglich. Darüber hinaus ist für diese Steuerung kein zusätzlicher Bauraum erforderlich. Die Steuerung ist stattdessen vielmehr in eine zentrale Steuereinrichtung integriert, welche in der Regel bereits vorhanden ist.

Die Heizung ist erfindungsgemäße mit einem Stanzgitter gestaltet. Eine solche Stanzgitterheizung ermöglicht eine hohe und zugleich kostengünstige Heizleistung von bis zu 600 Watt. Heutzutage existierende Lösungen haben hingegen lediglich eine Leistung von ca. 150 bis 250 Watt, wobei eine Erhöhung der Heizleistung gerade von PTC-Heizelementen eine erhebliche Kostensteigerung und auch Bauraumsteigerung implizieren würde.

Das Stanzgitter umfasst zwei Teile. Ein erster Teil dient während einer Heizphase als ein Widerstand der Heizung und während der restlichen Zeit als eine Elektrode für die Wasserdetektierung. Der zweite Teil dient als zweite Elektrode für die Wasserdetektierung.

Beide Teile werden durch einen Umspritzungsvorgang zu einer Baueinheit verbunden. Die Stanzgitterheizung führt ferner zu größeren Strömungsquerschnitten und damit zu weniger Druckverlust. Ferner ist die Wärmeführung direkter und die Wärmeverteilung besser.

Bei einer ersten vorteilhaften Weiterbildung der erfindungsgemäßen Filtereinrichtung ist die Steuereinrichtung speziell dazu angepasst, allein die Heizleistung der Heizung sowie die Auswertung des Wasserstandes am Wassersensor zu steuern.

Eine derartige Steuereinrichtung ist speziell für die Aufgaben der Heizleistungssteuerung und der Wasserstandsermittlung angepasst. Sie kann entsprechend diesem begrenzten Aufgabenbereich sehr klein und kompakt gestaltet sein. Damit ist die Grundlage für eine Anordnung einer solchen Steuereinrichtung an oder in der Filtereinrichtung geschaffen.

Bei einer zweiten vorteilhaften Weiterbildung der erfindungsgemäßen Filtereinrichtung ist die Steuereinrichtung im Filtergehäuse angeordnet.

Mit einer derartigen Anordnung geht zwar gegebenenfalls eine Vergrößerung der Filtereinrichtung einher, zugleich ist aber eine Einheit aus Filtereinrichtung und

Steuereinrichtung geschaffen, die einfach vormontiert und nachfolgend in einem Kraftfahrzeug verbaut werden kann.

Bei einer dritten vorteilhaften Weiterbildung der erfindungsgemäßen Filtereinrichtung ist die Steuereinrichtung in einer das Filtergehäuse mit einer elektrischen Zuleitung verbindenden Steckverbindung angeordnet.

Die derartige Anordnung einer Steuereinrichtung führt zu einer sehr kompakten Bauform. Die Steuereinrichtung ist vorteilhaft an einem am Filtergehäuse angebrachten Steckteil der Steckverbindung, insbesondere einer Steckbuchse, angeordnet. Alternativ ist es von Vorteil die Steuereinrichtung an einem Steckteil der Steckverbindung anzuordnen, welches sich an der Zuleitung bzw. dem Zuleitungskabel befindet. Ein derartiges Steckteil ist vorteilhaft als kompakter und zugleich "intelligenter" Stecker gestaltet.

Bei einer vierten vorteilhaften Weiterbildung der erfindungsgemäßen Filtereinrichtung ist die Steuereinrichtung in einem sekundären Steuergerät, insbesondere einem Glühkerzensteuergerät, angeordnet.

Eine derartige Anordnung der erfindungsgemäß vorgesehenen Steuereinrichtung nutzt vorteilhaft Teilbereiche eines ohnehin bereits vorhandenen bzw. vorzusehenden Steuergeräts. So kann beispielsweise dessen Leiterplatte oder Stromversorgung mitbenutzt werden. Alternativ kann die Steuereinrichtung vorteilhaft auch in ein Motorsteuergerät oder ein Bremssteuergerät integriert sein.

Nachfolgend wird eine beispielhafte Ausführungsform der erfindungsgemäßen Lösung anhand der beigefügten schematischen Zeichnungen näher erläutert. Es zeigt:
Fig. 1 eine stark vereinfachte Darstellung von Bauteilen einer Motorsteuerung mit einer zugehörigen erfindungsgemäßen Filtereinrichtung,
Fig. 2 ein Filterelement der Filtereinrichtung gemäß Fig. 1,
Fig. 3 einen Schaltungsplan einer ersten erfindungsgemäßen Ausführungsform einer beheizten Filtereinrichtung mit zugeordneter Steuereinrichtung,

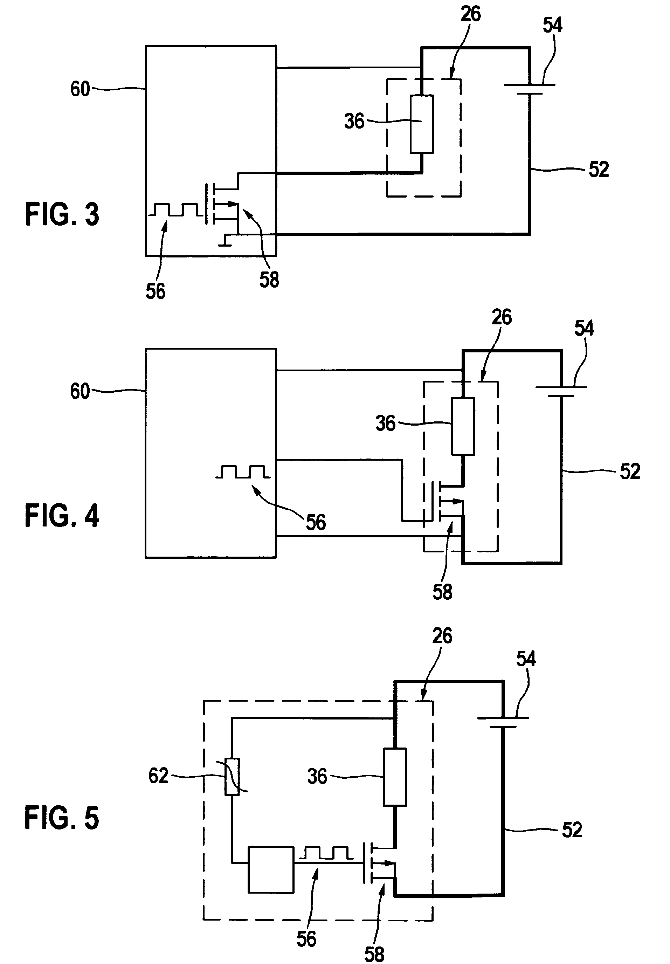

Fig. 3 einen Schaltungsplan einer zweiten erfindungsgemäßen Ausführungsform einer beheizten Filtereinrichtung mit zugeordneter Steuereinrichtung und
Fig. 3 einen Schaltungsplan einer dritten erfindungsgemäßen Ausführungsform einer beheizten Filtereinrichtung mit zugeordneter Steuereinrichtung,

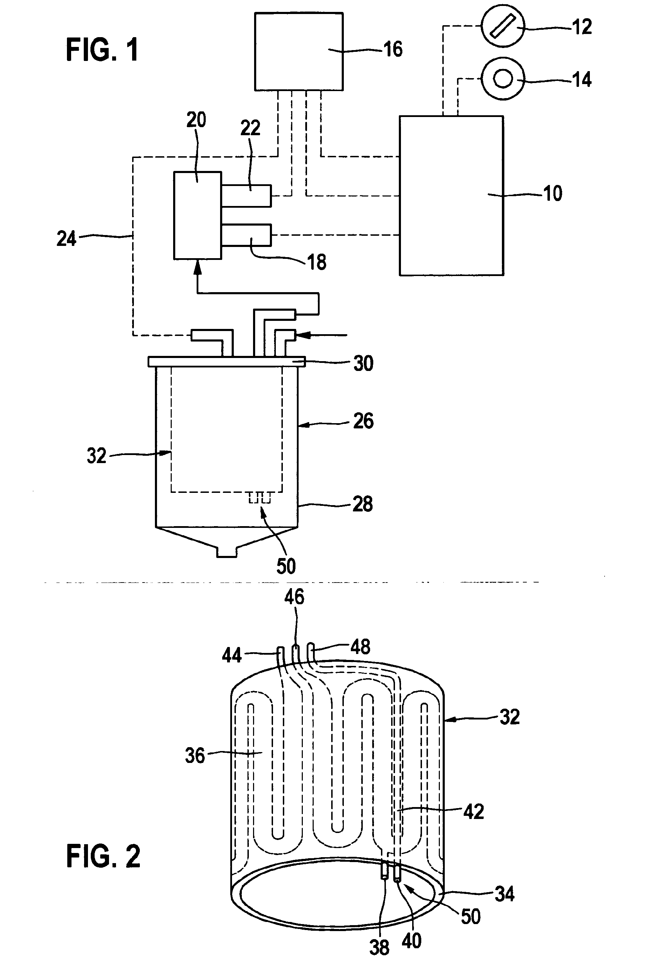

In der Fig. 1 ist ein Motorsteuergerät 10 dargestellt, welches über zugehörige, gestrichelt dargestellte Leitungen mit einem Glüh-/Startschalter 12, einer Vorglühanzeige 14, einem Glühstiftsteuergerät 16 und einem Kühlwassertemperaturfühler 18 stromleitend verbunden ist.

Mit dem Motorsteuergerät 10 wird unter Abfrage des Kühlwassertemperaturfühlers 18 unter anderem die Temperatur des sich am zugehörigen Motor 20 befindenden Kühlwassers bestimmt und entsprechend der Vorgabe des Glüh-/Startschalters 12 das Glühstiftsteuergerät 16 angesteuert. Dieses steuert dann seinerseits eine Glühstiftkerze 22 an, welche mit dem Glühstiftsteuergerät 16 über eine ebenfalls gestrichelt dargestellte Leitung betrieblich gekoppelt ist.

An dem für Heizaufgaben speziell angepassten Glühstiftsteuergerät 16 ist ferner über eine Leitung 24 eine Filtereinrichtung 26 angeschlossen, welche zum Filtern des zum Motor 20 geförderten Kraftstoffs vorgesehen ist.

Die Filtereinrichtung 26 ist mit einem becherförmigen Filtergehäuse 28 gestaltet, welches mit einem Deckel 30 verschlossen ist. In dem Filtergehäuse 28 befindet sich ein hohlzylindrisches Filterelement 32, in dessen Wandung 34 sich eine schlangenförmig verlegte Heizbahn 36 befindet. Aus der Wandung 34 ragen am unteren Randbereich zwei Wasserstandselektroden 38 und 40 heraus, von denen eine an der Heizbahn 36 und die andere Wasserstandselektrode 40 an einer ebenfalls in der Wandung 34 verlegten Kontaktbahn 42 angeschlossen ist.

Am oberen Randbereich der Wandung 34, welche zum Deckel 30 gewandt ist, ragen drei Kontakte 44, 46 und 48 aus der Wandung 34, von denen zwei an der Heizbahn 36 und der dritte Kontakt 48 an der Kontaktbahn 42 stromleitend angeschlossen sind.

Die drei Kontakte 44, 46 und 48 sind durch den Deckel 30 hindurch zu einer Steckverbindung 50 geführt, welche an der Oberseite des Deckels 30 die elektrische Verbindung zur Leitung 24 herstellt.

Mit den Wasserstandselektroden 38 und 40 ist an der Unterseite des Filterelements 32 ein Wassersensor bzw. Wasserstandssensor 50 für Wasser, welches durch das Filterelement 32 aus dem zu filternden Kraftstoff abgeschieden wurde und sich im unteren Bereich des becherförmigen Filtergehäuses 28 sammelt.

In der Fig. 3 ist eine Ausführungsform einer Filtereinrichtung 26 veranschaulicht, bei der in eine Heizleitung 52 eine Batterie 54 (Fahrzeugbatterie) und als Heizung die Heizbahn 36 in Reihe geschaltet sind. In der Heizleitung 52 ist ferner eine Steuerung für die Heizleistung eingebunden, die aus einer Pulsweitenmodulation 56 und einer Taktung 58 gebildet ist. Die Pulsweitenmodulation 56 und die Taktung 58 sind dabei in ein Steuergerät 60 integriert, welches innerhalb des zugehörigen (im Übrigen nicht dargestellten) Fahrzeugs eine Vielzahl an Steuerfunktionen übernimmt.

Die Fig. 4 zeigt eine Ausführungsform ähnlich jener der Fig. 3, bei der die Steuerung für die Heizleistung jedoch zweigeteilt ist. Dabei ist die Taktung 58 unmittelbar an der Filtereinrichtung 26, insbesondere an deren Stecker- oder Deckelbereich angeordnet, während die Pulsweitenmodulation 56 weiterhin in dem Steuergerät 60 untergebracht ist.

Die Ausführungsform gemäß Fig. 5 unterscheidet sich von jenen der Fig. 3 und 4 schließlich dadurch, dass sowohl die Taktung 58 als auch die Pulsweitenmodulation 56 unmittelbar an der Filtereinrichtung 26 untergebracht sind. Diese Elemente sind dabei in einer (nicht näher veranschaulichten) Steuereinrichtung zusammengefasst, welche auch zum Messen der Temperatur des zu filternden Mediums mittels einer Temperaturmesseinrichtung 62 angepasst ist.

Bei allen drei, in den Fig. 3 bis 5 gezeigten Ausführungsformen sind die zugehörigen Steuerungen sämtlich ferner dazu angepasst, dass sie auch die Funktion des oben genannten Wassersensors 50 sicherstellen.

## Patentansprüche

1. Filtereinrichtung (26), insbesondere Flüssigkeitsfilter, mit einem Filterelement (32), welches in einem Filtergehäuse (28) angeordnet ist, mit einer Heizung (36) zum Erwärmen von durch das Filterelement (32) strömendem Medium und mit einem Wassersensor (50; 38, 40) zum Erkennen von im Filtergehäuse (28) gesammeltem Wasser,
bei dem die Heizung (36) mit einem Stanzgitter gestaltet ist und mit dem Wassersensor (50; 38, 40) derart in baulicher Einheit ausgebildet ist, dass das Stanzgitter zwei Teile umfasst, von denen ein erster Teil während einer Heizphase als ein Widerstand der Heizung (36) und während einer restlichen Zeit als eine Elektrode (38) für die Wasserdetektierung dient, während der zweite Teil als zweite Elektrode (40) für die Wasserdetektierung dient und bei dem eine zentrale Steuereinrichtung (16) vorgesehen ist, die zum Steuern der baulichen Einheit von Heizung (36) und Wassersensor (50; 38, 40) angepasst ist.

2. Filtereinrichtung nach Anspruch 1,
**dadurch gekennzeichnet, dass** die Steuereinrichtung (16) dazu angepasst ist, allein die Heizleistung der Heizung (36) sowie die Auswertung des Wasserstandes am Wassersensor (50; 38, 40) zu steuern.

3. Filtereinrichtung nach Anspruch 1 oder 2,
**dadurch gekennzeichnet, dass** die Steuereinrichtung (16) im Filtergehäuse (28) angeordnet ist.

4. Filtereinrichtung nach Anspruch 1 oder 2,
**dadurch gekennzeichnet, dass** die Steuereinrichtung (16) in einer das Filtergehäuse (28) mit einer elektrischen Zuleitung verbindenden Steckverbindung angeordnet ist.

5. Filtereinrichtung nach Anspruch 1 oder 2,
**dadurch gekennzeichnet, dass** die Steuereinrichtung in einem sekundären Steuergerät, insbesondere einem Glühkerzensteuergerät (16), angeordnet ist.

## Claims

1. Filter device (26), in particular liquid filter, having a filter element (32) which is arranged in a filter housing (28), having a heating means (36) for heating medium flowing through the filter element (32), and having a water sensor (50; 38, 40) for identifying water which has collected in the filter housing (28),
in which the heating means (36) is designed with a stamped grid and is formed in one physical unit with the water sensor (50; 38, 40) in such a way that the stamped grid comprises two parts, a first part of which is used as a resistor of the heating means (36) during a heating phase and as an electrode (38) for the water detection operation during the remainder of the time, whereas the second part is used as a second electrode (40) for the water detection operation, and in which a central control device (16) is provided, this central control device being adjusted for the purpose of controlling the physical unit comprising the heating means (36) and the water sensor (50; 38, 40).

2. Filter device according to Claim 1, **characterized in that** the control device (16) is adjusted for the purpose of controlling only the heating power of the heating means (36) and the evaluation of the water level at the water sensor (50; 38, 40).

3. Filter device according to Claim 1 or 2, **characterized in that** the control device (16) is arranged in the filter housing (28).

4. Filter device according to Claim 1 or 2, **characterized in that** the control device (16) is arranged in a plug connection which connects the filter housing (28) to an electrical feed line.

5. Filter device according to Claim 1 or 2, **characterized in that** the control device is arranged in a secondary controller, in particular a glow plug controller (16).

## Revendications

1. Dispositif de filtre (26), en particulier filtre à liquide, comprenant un élément de filtre (32) qui est disposé dans un boîtier de filtre (28), comprenant un chauffage (36) pour chauffer le fluide s'écoulant à travers l'élément de filtre (32) et comprenant un capteur d'eau (50 ; 38, 40) pour détecter l'eau accumulée dans le boîtier de filtre (28),
dans lequel le chauffage (36) est configuré avec un grillage estampé et est réalisé avec le capteur d'eau (50 ; 38, 40) dans une unité structurelle de telle sorte que le grillage estampé comprenne deux parties dont une première partie pendant une phase de chauffage sert de résistance au chauffage (36) et pendant un temps restant sert d'électrode (38) pour la détection d'eau, tandis que la deuxième partie sert de deuxième électrode (40) pour la détection d'eau et
dans lequel un dispositif de commande central (16) est prévu, lequel est adapté pour commander l'unité structurelle formée du chauffage (36) et du capteur d'eau (50 ; 38, 40).

2. Dispositif de filtre selon la revendication 1, **caractérisé en ce que** le dispositif de commande (16) est adapté pour commander à lui seul la puissance de chauffage du chauffage (36) ainsi que l'analyse du niveau d'eau au niveau du capteur d'eau (50 ; 38, 40).

3. Dispositif de filtre selon la revendication 1 ou 2,
**caractérisé en ce que** le dispositif de commande (16) est disposé dans le boîtier de filtre (28).

4. Dispositif de filtre selon la revendication 1 ou 2,
**caractérisé en ce que** le dispositif de commande (16) est disposé dans un connecteur enfichable reliant le boîtier de filtre (28) à une conduite d'amenée électrique.

5. Dispositif de filtre selon la revendication 1 ou 2,
**caractérisé en ce que** le dispositif de commande est disposé dans un appareil de commande secondaire, notamment un appareil de commande à incandescence (16).
